# EUROPEAN PATENT SPECIFICATION

(11) **EP 1 838 056 B1**
(45) Date of publication and mention of the grant of the patent: **15.10.2008**
(21) Application number: 07005962.1
(22) Date of filing: 22.03.2007
(51) Int. Cl.: H04L 12/56

(54) **A method and device for automatic configuration of PVC for CPE**
Verfahren und Vorrichtung zur automatischen Konfiguration von PVC für CPE
Procédé et dispositif pour la configuration automatique de PVC pour des CPE

(30) Priority: 24.03.2006 CN 200610034665
(43) Date of publication of application: 26.09.2007
(73) Proprietor: Huawei Technologies Co., Ltd., Shenzhen, Guangdong Province 518129 (CN)
(72) Inventor: Han, Xuesong c/o Int.Prop Dept; Huawei Adm.Bldg., Shenzhen, Guangdong Province 518129 (CN); Hua, Jin c/o Int.Prop.Dept.;Huawei Adm.Bldg., Shenzhen, Guangdong Province 518129 (CN); Hu, Guangping c/o Int.Prop.Dept.;Huawei Adm.bldg., Shenzhen, Guangdong Province 518129 (CN); Qin, Shishang c/o Int.Prop.Dept.;Huawei Adm.Bldg., Shenzhen Guangdong Province 518129 (CN); Wang, Nian c/o Int.Prop.Dept.;Huawei Adm.Bldg., Shenzhen, Guangdong Province 518129 (CN)
(74) Representative: Epping - Hermann - Fischer

(56) References cited:
- US-A1- 2003 078 999

## Description

### FIELD OF THE INVENTION

This invention relates to the technical field of inter-networking, specifically to Asymmetric Digital Subscriber Line (ADSL).

### BACKGROUND OF THE INVENTION

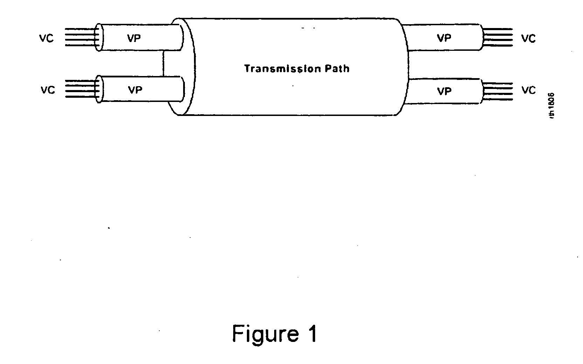

At present, more and more users choose the ADSL method to access the internet and an ADSL Customer Premises Equipment (CPE) device is necessary for this type of internet access method. Most ADSL services are based on Asynchronous Transfer Mode (ATM) technology. The most important characteristic of ATM technology is that the process of multiplexing, exchanging and transferring of ATM cells are all conducted on a Virtual Channel (VC). The VC is the logic connector of point-to-point links in the ATM network and the communication channel for transmitting ATM cells between two or more points. The VC can also be used for information transfer between users, between the user and the network, and between the networks. The Virtual Path (VP) is a bundle of VCs possessing the same VC identifier at a specific reference point. During the transfer, the VCs are bundled into VPs. The relationship between the VC and VP are shown in Figure 1. Therefore, the ATM cells of different users are transmitted on different VPs and VCs in the ATM network, while different VPs and VCs are distinguished by their Virtual Path Identifiers (VPI) and Virtual Channel Identifiers (VCI).

There are two methods to establish a connection through the VC: Switching Virtual Channel (SVC) and Permanent Virtual Channel (PVC). The SVC is a virtual channel established through signaling between terminal devices when users need to communicate. SVC is similar to the subscriber line of the Public Switched Telephone Network (PSTN). Communication can only proceed after the network establishes corresponding virtual channels for both sides of the communication following a connection request. When the communication is completed, the SVC will be released through the signals. The PVC is preestablished in the network by the network manager and maintained regardless of any through service or user access, until released by the network manager. Therefore, PVC is similar to the leased line in the PSTN. When users need to communicate with a PVC connection, the communication will not fail from the lack of network resources. PVC is normally used for certain special users, for example, the VC of a signal cell must be PVC. The VC of users requiring leased line with fixed channel bandwidth, such as ADSL users, may also choose PVC.

Due to ADSL technology-related factors and the countrywide difference of the VPI/VCI of PVCs, the CPE can not usually be auto-configured. Instead, the PVCs need to be configured manually by the user or telecommunications installation staff to correspond to the Central Office (CO) device in order to negotiate/activate the ADSL line and access the Internet. This can be a time-consuming process. If the CPE is reset to its default factory configuration, it would be more complicated as the user or telecommunications installation staff would usually have to re-configure the CPE.

U.S. patent application publication No. US2003/0078999 A1 discloses a method and an apparatus to detect configuration information that may be used to configure a permanent virtual circuit (PVC) between a digital subscriber line (DSL) customer premise equipment (CPE) and a DSL access module (DSLAM).

A current technical solution to the said issue is to pre-configure multiple PVCs (normally more than 8 PVCs) in the default factory configuration of the CPE. Each PVC is configured with a different VPI/VCI parameter. When the CPE is in use, it will try to negotiate the PVC one by one with the CO device. Once the negotiation succeeds, that particular PVC will be kept as the working PVC.

### BRIEF SUMMARY OF THE INVENTION

The object of the invention is to provide a method to automatically configure the PVC parameters of a CPE.

An embodiment of this invention adopts the following technical solution: a method of PVC auto-configuration for a CPE. The solution includes the following steps:

The CPE appends the parameters of a stored list of PVC parameters to the packets received from the user's PC before forwarding it to the CO device for PVC detection;

The CPE receives the reply packets from the BRAS on the network side, and modifies the actual PVC parameters to those received from the packets.

This invention also describes a type of CPE to configure PVC automatically. The said CPE stores a list of PVC parameters and detects PVCs based on the stored parameters to ensure that the same PVC as the CO device is used.

### BRIEF DESCRIPTION OF THE DRAWINGS

Fig. 1: The relationship between the VP and VC in the ATM network.
Fig. 2: Device networking of the embodiment of the invention.
Fig. 3: Flowchart of the embodiment of the invention.

### DETAILED DESCRIPTION OF THE INVENTION

The basic principle of the embodiment of this invention is to pre-store a list of the PVC parameters in the ADSL CPE. The CPE detects each PVC in the list in turn by forwarding the packets received from the user's PC. Upon receiving the reply packets from the BRAS containing the PVC parameters, the CPE will set the PVC parameters to those of the CPE's. This fulfills the auto-detection function of multiple PVC parameters while supporting just one PVC at the CPE.

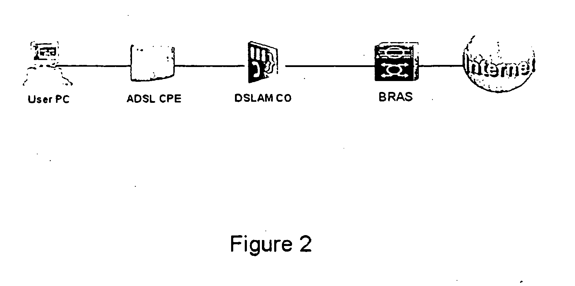

The device networking of this invention is shown in Fig. 2, including the user's PC, ADSL CPE, DSLAM CO device, BRAS and Internet. The difference between such an ADSL CPE and a regular CPE is the pre-storing of a list of PVC parameters, normally a list of the VPI/VCI values, in the CPE. The said list is used to detect parameters when the CPE negotiates PVC with the CO.

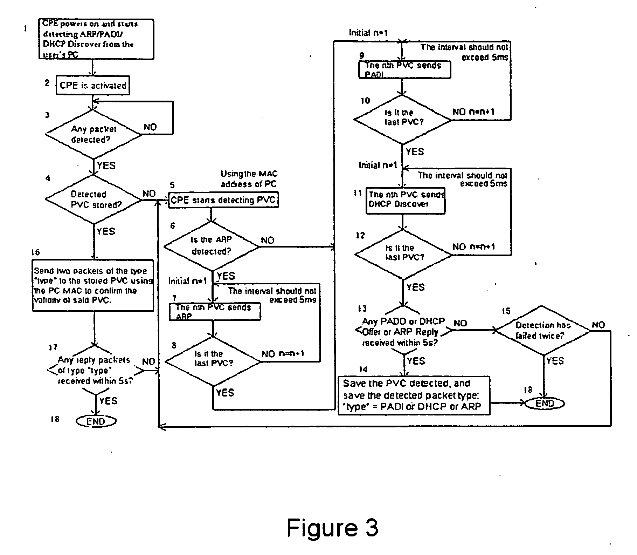

The flowchart of this invention is shown in Fig. 3:
Step 1. Power on the CPE. After establishing the Ethernet connection between the CPE and the user's PC, CPE will start to detect for any ARP, PADI or DHCP Discover packets that was automatically sent from the user's PC;
Step 2. CPE is activated. CPE will try to establish a PVC with the devices on the network side;
Step 3. Following CPE activation, it will keep detecting the packets from the user's PC if no corresponding packets were received, until these packets were detected;
Step 4. If the CPE receives ARP, PADI or DHCP Discover packets from the user's PC before/after activation, it will check if the PVC parameters from a previous successful detection is stored. If not, it means that the CPE is installed for the first time or the previous detection has failed. Then go to Step 5, otherwise go to Step 16;
Step 5. The CPE starts to detect PVC using the MAC address of the user's PC. The detailed steps are as follows: The CPE receives the ARP packets sent from the user's PC through an Ethernet connection and learns the MAC address of the user's PC from the packets. These packets and the MAC address may be used to perform the detection in Step 7;
Step 6. Check if the packets received are ARP packets. If so, go to Step 7, otherwise go to Step 9;
Step 7. The CPE uses the ARP packets (forwards the ARP packets received from the user's PC) and appends each of the PVC parameters onto the packets, working from the first VPI/VCI value in the list of PVC parameters stored in the CPE to detect PVCs in turn. A round of PVC detection concludes with the last VPI/VCI parameter (the default PVCs for other services are skipped during detection, such as the PVC parameters specific for network management; the interval between packet transmission should not exceed 5ms; each ARP packet should be sent twice for detecting each PVC parameter to ensure its reliability; at the same time, different type packets are transmitted by modifying the VPI/VCI since there is only one PVC configured at the CPE);
Step 8. Check if it is the last PVC parameter in the list. If so, go to Step 9, otherwise go to Step 7;
Step 9. The CPE uses PADI packets (forwards the packets received from the user's PC) and appends the PVC parameters onto the packets, working from the first VPI/VCI in the list of PVC parameters stored in the CPE to detect PVCs in turn. A round of PVC detection concludes with the last VPI/VCI parameter (the default PVCs of other services are skipped during detection, such as the PVC parameters specific to network management; the interval between packet transmission should not exceed 5ms; each PADI packet should be sent twice for detecting each PVC parameter to ensure its reliability);
Step 10. Check if it is the last PVC parameter in the list. If so, go to Step 11, otherwise go to Step 9;
Step 11. The CPE uses the DHCP Discover packets (forwards the packets received from the user's PC) and appends each of the PVC parameters onto the packets, working from the first VPI/VCI value in the list of PVC parameters stored in the CPE to detect the PVCs in turn. A round of PVC detection concludes with the last VPI/VCI parameter (the default PVCs for other services are skipped during detection, such as the PVC parameters specific to network management; the interval between packet transmission should not exceed 5ms; each DHCP Discover packet should be sent twice for detecting each PVC parameter to ensure its reliability);
Step 12. Check if it is the last PVC parameter in the list. If so, go to Step 13, otherwise go to Step 11;
Step 13. After a round of ARP, PADI and DHCP Discover detection, wait for 5 seconds to confirm if any PADO, DHCP Offer or ARP Reply packets are received from the BRAS on the network side, in order to confirm if the detection is successful (the actual PVC of the CPE should return to the default PVC value after it has finished sending all the detection packets,. This PVC should be valid for use during the 5 seconds interval while waiting for the reply from the BRAS); If reply packets are received, go to Step 14, otherwise go to Step 15;
Step 14. Upon receiving the reply packets with the PVC parameters from the BRAS, the CPE sets the actual PVC parameters to the same as the parameters in the reply packets and saves it. At the same time, the CPE also saves the packet type of the successful detection to be used directly in confirming the validity of the stored PVC parameters upon future reboot;
Step 15. If the CPE failed to receive any response within 5 seconds after sending all the detection packets, the detection has failed. The detection is repeated (go back to Step 5), but not pursued if the detection fails once again;
Step 16. The CPE sends two continuous detection packets using the packet type of the previous successful detection using the MAC address of the user's PC (i.e. the packet type saved during previous successful detection). The transmission interval of the two packets should not exceed 5ms (if the CPE detects the PVC parameters saved in the CPE during the previous successful detection, it means that the previous detection was successful. Therefore, the CPE only needs to check if the saved PVC parameters are still valid and not repeat the detection of all the PVC parameters in order to save on the network bandwidth and PVC detection time.);
Step 17. Wait for 5 seconds to confirm if any reply packets are received from the BRAS containing the PVC parameters in order to confirm if this PVC is still valid (the actual PVC of the CPE should be kept valid during the 5 seconds interval). If it is, go to step 18, otherwise go to step 5;
Step 18. If corresponding reply packets are received, then it means that this PVC is still valid. The detection flow is completed. The CPE modifies its PVC parameters to the detected parameters.

This invention overcomes the insufficiency of current technologies by pre-storing a list of PVC parameters in the CPE, appending the PVC parameters onto the packets received from the user's PC, and then forwarding the packets to the CO device for PVC detection. Upon receiving the reply packets from the BRAS containing the PVC parameters, the CPE will set the said parameters as the actual working PVC parameters. This invention adopts multiple strategies and packet types to detect PVC, thereby improving its reliability and flexibility. At the same time, the communication between the CPE and a higher layer system is infrequent during the configuration to prevent a broadcast storm within the network. In addition, the ADSL CPE needs to maintain only a single list of PVC parameters, which can be pre-configured before leaving the factory. And only one PVC is required in practice, which reduces the operation cost at the terminal and the extra cost from using multiple PVCs.

## Claims

1. A method for automatic configuration of permanent virtual channel, hereinafter referred to as PVC, for a customer premise equipment, hereinafter referred to as CPE, whereby the method comprises:
the CPE appending a stored list of PVC parameters of a CPE onto packets received from a user's Personal Computer, hereinafter referred to as PC, and forwarding the packets to a central office, hereinafter referred to as CO, device to detect validity of corresponding PVC parameters;
receiving reply packets with PVC parameters from a Broadband Remote Access Server, hereinafter referred to as BRAS, on a network side, the CPE configuring said PVC parameters as its own parameters.

2. Method of claim 1, further comprising, pre-storing the list of PVC parameters at the CPE.

3. Method according to one of the previous claims, wherein said list of PVC parameters is a list of PVC virtual path identifier /virtual channel identifier values.

4. Method according to one of the previous claims, further comprising:
detecting packets sent from the user's PC, the CPE checking whether it has stored PVC parameters from a previous successful detection, if it has, the CPE modifying its own PVC parameters to the stored PVC parameters after confirming their validity; otherwise, appending the stored list of PVC parameters of the CPE onto packets received from the user's PC and forwarding the packets to the CO device to detect validity of corresponding PVC parameters.

5. The method of claim 4, wherein said CPE confirming the validity of the stored PVC parameters from the previous successful detection is performed by receiving the reply packets from the BRAS after sending detection packets from the CPE based on the PVC packet type that was-successtully detected previously.

6. The method of claim 1, with:
the CPE checking packets received from the user's PC to confirm if there is any Address Resolution Protocol, hereinafter referred to as ARP, packet,
if there is not, the CPE appending the PVC parameters in said list of PVC parameters onto PPPoE Active Discovery Initiation, hereinafter referred to as PADI, packets or Dynamic Host Configuration Protocol, hereinafter referred to as DHCP, Discover packets, and forwarding to the CO device CPE,
if there is, the CPE appending the PVC parameters in said list of PVC parameters onto ARP packets, and forwarding to the CO device;
the CPE receiving ARP reply, PPPoE Active Discovery Offer, hereinafter referred to as PADO, or DHCP Offer packets from the BRAS, said packets including PVC parameters, the CPE modifying its PVC parameters to the parameters in the packets.

7. The method of claim 6, further comprising: the CPE modifying its PVC parameters to the PVC parameters in the packets, storing the modified PVC parameters, and storing a packet type used to detecting PVC this time.

8. The method of claim 1, wherein said CPE uses a Media Access Control, hereinafter referred to as MAC, address of the user's PC when performing a PVC detection.

9. The method of claim 1, wherein said forwarding the packets appended with the parameters in the list of PVC parameters to perform a PVC detection includes using the same PVC but modifying its parameter.

10. A device for automatic configuration of permanent virtual channel, hereinafter referred to as PVC, for a customer premise equipment, hereinafter referred to as CPE, whereby said CPE is adapted to store a list of PVC parameters, append the stored list of PVC parameters of the CPE onto packets received from a user's Personal Computer, hereinafter referred to as PC, and forward the packets to a Central Office, hereinafter referred to as CO, device to detect validity of corresponding PVC parameters.

## Patentansprüche

1. Verfahren zur automatischen Konfiguration eines permanenten virtuellen Kanals, im Folgenden als PVC bezeichnet, für eine Teilnehmereinrichtung, im Folgenden als CPE bezeichnet, wobei das Verfahren folgendes umfasst:
die CPE hängt eine gespeicherte Liste von PVC-Parametern einer CPE an Pakete an, die vom Personal-Computer eines Benutzers, im Folgenden als PC bezeichnet, empfangen werden, und leitet die Pakete an eine Einrichtung einer Vermittlungsstelle, im Folgenden als CO bezeichnet, weiter, um die Gültigkeit entsprechender PVC-Parameter zu erkennen;
Empfangen von Antwort-Paketen mit PVC-Parametern von einem Breitband-Fernzugriffs-Server, im Folgenden als BRAS bezeichnet, auf einer Netzwerk-Seite, wobei die CPE die PVC-Parameter als ihre eigenen Parameter konfiguriert.

2. Verfahren aus Anspruch 1, das ferner das vorherige Speichern der Liste von PVC-Parametern in der CPE umfasst.

3. Verfahren gemäß einem der vorherigen Ansprüche, wobei die Liste von PVC-Parametern eine Liste von Werten der virtuellen Pfad-Kennungen / virtuellen Kanal-Kennungen des PVC ist.

4. Verfahren gemäß einem der vorherigen Ansprüche, ferner umfassend:
Erkennen von Paketen, die vom Benutzer-PC gesendet wurden, wobei die CPE überprüft, ob sie gespeicherte PVC-Parameter von einer vorherigen erfolgreichen Erkennung hat, wenn sie sie hat, ändert die CPE ihre eigenen PVC-Parameter in die gespeicherten PVC-Parameter, nachdem sie ihre Gültigkeit bestätigt hat; andernfalls Anhängen der gespeicherten Liste von PVC-Parametern der CPE an Pakete, die vom PC des Benutzers empfangen wurden, und Weiterleiten der Pakete an die CO-Einrichtung, um die Gültigkeit der entsprechenden PVC-Parameter zu erkennen.

5. Verfahren aus Anspruch 4, wobei die Erkennung der Gültigkeit der gespeicherten PVC-Parameter durch die CPE aus der vorherigen erfolgreichen Erkennung durchgeführt wird, indem die Antwort-Pakete vom BRAS empfangen werden, nachdem Erkennungs-Pakete von der CPE gesendet wurden, die auf dem PVC-Paket-Typ basieren, der zuvor erfolgreich erkannt wurde.

6. Verfahren aus Anspruch 1, wobei:
die CPE die Pakete, die vom PC des Benutzers empfangen wurden, überprüft, um zu bestätigen, ob ein Paket eines Adressen-Auflösungs-Protokolls, im Folgenden als ARP bezeichnet, vorhanden ist,
falls nicht, hängt die CPE die PVC-Parameter der Liste von PVC-Parametern an PPPoE Active Discovery Initiation Pakete, im Folgenden als PADI bezeichnet, oder an Erkennungs-Pakete des Dynamic Host Configuration Protocol, im Folgenden als DHCP bezeichnet, an und leitet sie an die CPE der Co-Einrichtung weiter,
falls ja, hängt die CPE die PVC-Parameter der Liste von PVC-Parametern an ARP-Pakete an, und leitet sie an die CO-Einrichtung weiter;
die CPE empfängt die ARP-Antwort-Pakete, PPPoE Active Discovery Offer, im Folgenden als PADO bezeichnet, oder DHCP Offer Pakete vom BRAS, wobei die Pakete PVC-Parameter enthalten, wobei die CPE ihre PVC-Parameter auf die Parameter in den Paketen ändert.

7. Verfahren aus Anspruch 6, ferner umfassend:
die CPE ändert ihre PVC-Parameter auf die PVC-Parameter in den Paketen, speichert die geänderten PVC-Parameter und speichert einen Paket-Typ, der diesmal zur Erkennung der PVC benutzt wurde.

8. Verfahren aus Anspruch 1, wobei die CPE eine Adresse einer Media Access Control, im Folgenden MAC genannt, eines Benutzer-PCs benutzt, wenn sie die PVC-Erkennung durchführt.

9. Verfahren aus Anspruch 1, wobei die Weiterleitung der Pakete, an die die Parameter in der Liste von PVC-Parametern angehängt sind, um eine PVC-Erkennung durchzuführen, die Benutzung desselben PVC, aber die Änderung seines Parameters umfasst.

10. Vorrichtung zur automatischen Konfiguration eines permanenten virtuellen Kanals, im Folgenden als PVC bezeichnet, für eine Teilnehmereinrichtung, im Folgenden als CPE bezeichnet, wobei die CPE angepasst ist, eine Liste von PVC-Parametern zu speichern, die gespeicherte Liste von PVC-Parametern der CPE an Pakete anzuhängen, die vom Personal-Computer eines Benutzers, im Folgenden als PC bezeichnet, empfangen werden, und die Pakete an eine Einrichtung einer Vermittlungsstelle, im Folgenden als CO bezeichnet, weiterzuleiten, um die Gültigkeit entsprechender PVC-Parameter zu erkennen.

## Revendications

1. Méthode pour la configuration automatique d'un canal virtuel permanent, désigné ci-après PVC, pour un équipement des locaux d'abonné, désigné ci-après CPE, sachant que là méthode comprend :
Le CPE adjoint une liste enregistrée de paramètres PVC d'un CPE à des paquets reçus d'un ordinateur personnel d'utilisateur, désigné ci-après PC, et transmet lesdits paquets à un équipement d'office central, désigné ci-après CO, pour détecter la validité des paramètres PVC afférents ;
La réception de paquets de réponse avec les paramètres PVC à partir d'un serveur d'accès distant à large bande, désigné ci-après BRAS, sur un côté du réseau, et la configuration, par le CPE, desdits paramètres PVC comme ses propres paramètres.

2. Méthode selon la revendication 1, comprenant en outre le pré-enregistrement de la liste de paramètres PVC dans le CPE.

3. Méthode selon l'une quelconque des revendications précédentes, dans laquelle ladite liste de paramètres PVC est une liste de valeurs d'identificateurs de conduits virtuels/d'identificateurs de canaux virtuels PVC.

4. Méthode selon l'une quelconque des revendications précédentes, comprenant en outre :
La détection des paquets envoyés par le PC de l'utilisateur, la vérification, par le CPE, s'il a enregistré des paramètres PVC provenant d'une détection antérieure réussie ; si tel est le cas, le CPE modifie ses propres paramètres PVC en les paramètres PVC enregistrés après avoir confirmé leur validité; dans le cas contraire, il adjoint la liste enregistrée de paramètres PVC de le CPE aux paquets reçus du PC de l'utilisateur et retransmet lesdits paquets à l'équipement du CO pour détecter la validité des paramètres PVC afférents.

5. Méthode selon la revendication 4, dans laquelle la validité des paramètres PVC enregistrés à partir de la détection antérieure réussie est exécutée par le CPE par réception de parquets de réponse à partir du BRAS après avoir envoyé les paquets de détection à partir de le CPE sur la base du type de paquets PVC qui a été détecté avec succès antérieurement.

6. Méthode selon la revendication 1, dans laquelle :
Le CPE vérifie les paquets reçus du PC de l'utilisateur pour confirmer s'il existe un paquet quelconque selon le protocole de résolution d'adresse, désigné ci-après ARP.
S'il n'en existe pas, le CPE adjoint les paramètres PVC de ladite liste de paramètres PVC aux paquets selon PPPoE Active Discovery Initiation, désigné ci-après PADI, ou Discover paquets selon le Dynamic Host Configuration Protocol, désigné ci-après DHCP, et retransmet ces derniers à le CPE de l'équipement de CO.
S'il en existe, le CPE adjoint les paramètres PVC de ladite liste de paramètres PVC aux paquets ARP et retransmet ces derniers à l'équipement du CO ; le CPE reçoit la réponse ARP, les PPPoE Active Discovery Offer, désignée ci-après PADO ou les DHC Offer packets provenant du BRAS, lesdits paquets contenant les paramètres PVC, le CPE modifie ses paramètres PVC en les paramètres contenus dans les paquets.

7. Méthode selon la revendication 6, comportant en outre :
L'CPE modifie ses paramètres PVC en les paramètres PVC des paquets, enregistre les paramètres PVC modifiés et enregistre un type de paquet utilisé pour détecter le PVC cette fois.

8. Méthode selon la revendication 1, dans laquelle le CPE utilise une adresse de contrôle d'accès au média, désigné ci-après MAC, du PC de l'utilisateur lors de l'exécution d'une détection de PVC.

9. Méthode selon la revendication 1, dans laquelle ladite retransmission de paquets adjoints aux paramètres de la liste de paramètres PVC pour l'exécution d'une détection de PVC comprend l'utilisation du même PVC, mais tout en modifiant ses paramètres.

10. Dispositif pour la configuration automatique d'un canal virtuel permanent, désigné ci-après PVC, pour un équipement des locaux d'abonné, désigné ci-après CPE, dans lequel ledit CPE est adapté pour enregistrer une liste de paramètres PVC, adjoindre la liste enregistrée de paramètres PVC de le CPE à des paquets reçus à partir d'un ordinateur personnel de l'utilisateur, désigné ci-après PC, et retransmettre lesdits paquets à un équipement d'office central, désigné ci-après CO, pour détecter la validité des paramètres PVC afférents.
